Europäisches Patentamt

(19) European Patent Office

Office européen des brevets

(11) Publication number : **0 367 282 B1**

## (12) EUROPEAN PATENT SPECIFICATION

(45) Date of publication of patent specification :
**15.02.95 Bulletin 95/07**

(51) Int. Cl.⁶ : **G06K 11/14**

(21) Application number : **89120381.2**

(22) Date of filing : **03.11.89**

(54) **Coordinate input apparatus.**

(30) Priority : **04.11.88 JP 277490/88**

(43) Date of publication of application :
**09.05.90 Bulletin 90/19**

(45) Publication of the grant of the patent :
**15.02.95 Bulletin 95/07**

(84) Designated Contracting States :
**DE ES FR GB IT NL**

(56) References cited :
EP-A- 0 207 527
EP-A- 0 284 048
GB-A- 2 042 726
GB-A- 2 179 152

(73) Proprietor : **CANON KABUSHIKI KAISHA**
**30-2, 3-chome, Shimomaruko,**
**Ohta-ku**
**Tokyo (JP)**

(72) Inventor : **Yoshimura, Yuichiro**
**95-7, Nakada-cho**
**Izumi-ku**
**Yokohama-shi Kanagawa-ken (JP)**
Inventor : **Taniishi, Shinnosuke**
**13-1-401, Kajigaya 2-chome**
**Takatsu-ku**
**Kawasaki-shi Kanagawa-ken (JP)**

(74) Representative : **Tiedtke, Harro, Dipl.-Ing. et al**
**Patentanwaltsbüro**
**Tiedtke-Bühling-Kinne & Partner**
**Bavariaring 4**
**D-80336 München (DE)**

# Description

## BACKGROUND OF THE INVENTION

### Field of the Invention

The present invention relates to a coordinate input apparatus and, more particularly, to a coordinate input apparatus in which a vibration which was input from a vibration input pen is detected by vibration sensors attached to a vibration propagating plate and the coordinates which were pointed by the vibration input pen are detected.

### Related Background Art

Hitherto, a coordinate input apparatus comprising an input pen and a tablet has been known as a device to input hand-written characters, figure, and the like to a processing unit of a computer.

Various kinds of coordinate detecting types can be mentioned. Among them, a type using an elastic wave has been known.

According to such a type which, e.g., is disclosed in EP-A-0 284 048, a vibration input pen is come into contact with a vibration propagating plate (serving as a coordinate input surface of a tablet) and the vibration which is generated from the vibration input pen is detected by a plurality of vibration sensors attached at predetermined positions of the vibration propagating plate. The coordinate position indicated by the vibration input pen is calculated on the basis of the delay times until the vibration is detected by the vibration sensors.

It is the largest advantage of the coordinate input apparatus of such a type that the structure of the input tablet is very simple and the apparatus can be provided by low costs.

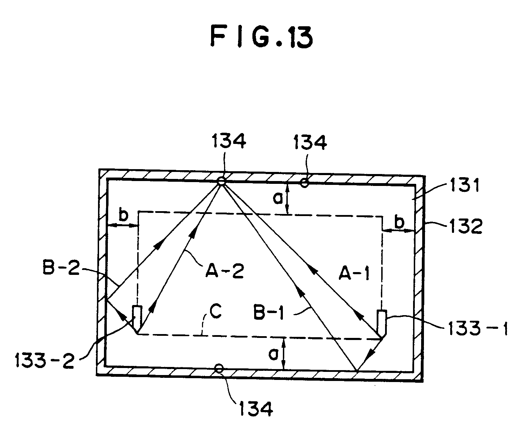

Fig. 13 shows an example of a construction of a conventional coordinate input apparatus of the vibration detection type.

As shown in the diagram, hitherto, in order to prevent influences by reflected waves B-1 and B-2 from the peripheral portion for a size of vibration propagating plate 131, an effective area C in which vibration input pens 133-1 and 133-2 can input coordinates without being influenced by the reflected waves is provided. That is, the actual coordinate input area is limited to the effective area C.

The effective area C is fairly smaller than the size of the vibration propagating plate 131. Namely, in Fig. 13, for instance, with respect to a vibration sensor 134-1, when coordinates are input from the position of the vibration pen 133-1, it is necessary to provide a difference between the propagation paths of a direct wave A-1 and the reflected wave B-1 so as to have a predetermined value or more in a manner such that a difference between the propagation times of the direct wave A-1 and the reflected wave B-1 does not influence the waveform detection. Therefore, as shown in the diagram, coordinates must be input by using the vibration input pen 133-1 from the position which is away from the boundary of the lower side of a vibration preventing material by a predetermined distance a.

Similarly, at the position of the vibration input pen 133-2, it must be away from the left side boundary of the vibration preventing material by only a predetermined distance b. The values of a and b need to be set in a manner such that in the vibration sensors, the values a and b become maximum when the vibration input pens are located at the corner portions and the area which is inside from the boundary portions of the vibration preventing material by only the distances corresponding to the maximum values $a_{max}$ and $b_{max}$ is set to the effective input area. In other words, when a desired input area exists, there is a drawback such that it is necessary to use the vibration propagating material of the size which is larger than the desired input area by only the distances of $a_{max}$ and $b_{max}$ and the whole size of the apparatus increases.

## SUMMARY OF THE INVENTION

It is the first object of the invention to provide a coordinate input apparatus in which the ratio of the effective area regarding the coordinate input to the size of the apparatus main body is enlarged, thereby making it possible to prevent that the whole apparatus increases in size.

In an embodiment of the coordinate input apparatus of an ultrasonic type, a vibration propagating plate is used in which the portion out of the effective area regarding the coordinate input is bent to the back surface.

In a further embodiment of the coordinate input apparatus of the ultrasonic type, a vibration propagating plate is provided having a triple-layer structure in which a vibration insulative layer is sandwiched.

According to the invention this object is accomplished by a coordinate input apparatus comprising a vibration propagating plate, a plurality of vibration sensors attached at predetermined positions of said vibration propagating plate, a vibration input pen for inputting a vibration to a predefined coordinate input area of said vibration propagating plate, and means for detecting a coordinate position of said vibration input pen on the basis of times which are required until said vibration input by said vibration input pen is detected by said vibration sensors, characterized in that portions of said vibration propagating plate near edge sides which portions lie outside said coordinate input area of said vibration propagating plate have a curved shape such that the ratio of the predefined coordinate input area to the external dimensions of the apparatus is enlarged, thereby making it possible to prevent the whole apparatus increasing in size.

The advantages of the invention will become apparent and obvious to those skilled in the pertinent art upon referring to the following description provided in connection with the accompanying drawings, of which:

## BRIEF DESCRIPTION OF THE DRAWINGS

Fig. 1A is a block constructional diagram of a coordinate input apparatus of an embodiment of the present invention;

Fig. 1B is a cross sectional view of an edge portion of a vibration propagating plate in the embodiment;

Fig. 2 is a diagram showing a structure of a vibration pen;

Fig. 3 is a diagram showing an internal construction of an operation controller in the embodiment;

Fig. 4 is a diagram for explaining the measurement of distances between a vibration pen and vibration sensors;

Fig. 5 is a diagram showing a partial constructional content of a signal waveform detector in the embodiment;

Fig. 6 is a diagram for explaining the principle of the calculation of the coordinate position;

Figs. 7A to 7C are diagrams for explaining structures of a vibration propagating plate in the embodiment;

Figs. 8A and 8B are cross sectional views for explaining convenience/inconvenience of the edge portions of the vibration propagating plates;

Fig. 9 is a cross sectional view showing a structure of the edge portion of a vibration propagating plate in another embodiment;

Fig. 10 is an external perspective view of the vibration propagating plate in another embodiment;

Figs. 11A to 11C and 12 are diagrams showing vibration propagating plates in other embodiments; and

Fig. 13 is a diagram for explaining a conventional vibration propagating plate and its effective area.

## DETAILED DESCRIPTION OF THE DRAWINGS

An embodiment according to the present invention will be described in detail hereinbelow with reference to the drawings.

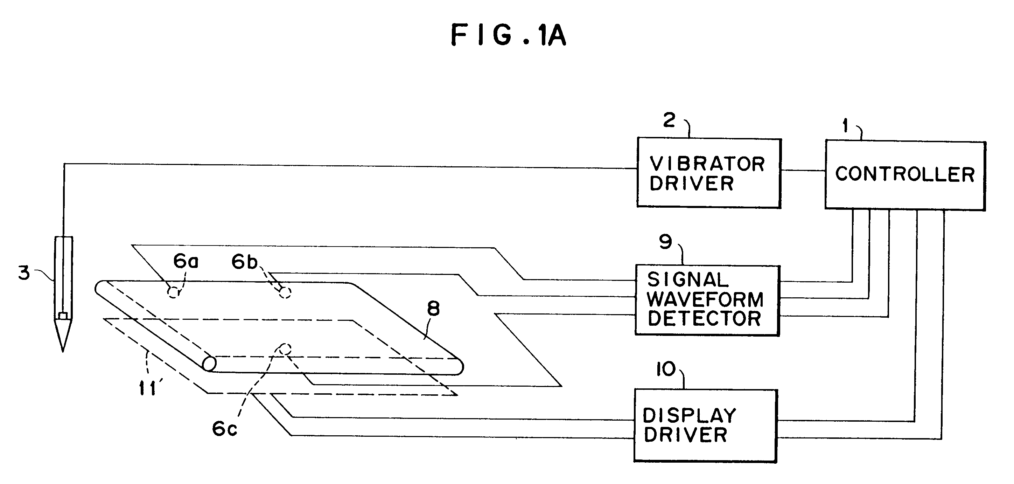

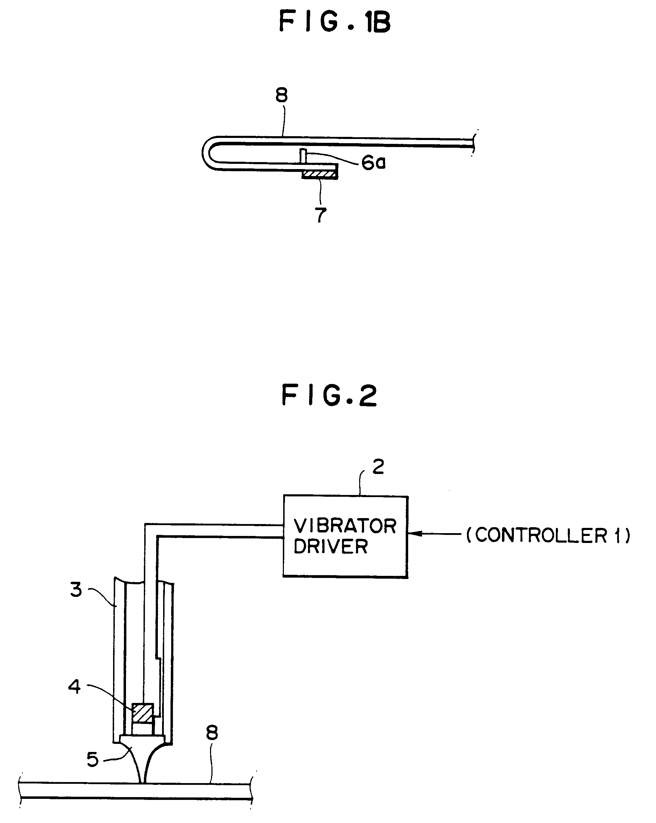

<Description of the construction of the apparatus (Figs. 1 and 2)>

Fig. 1A shows a structure of a coordinate input apparatus in an embodiment of the present invention.

In the diagram, reference numeral 1 denotes an operation controller for controlling the whole coordinate input apparatus and calculating the coordinate position. Reference numeral 2 indicates a vibrator driver to vibrate a pen tip of a vibration input pen 3. Reference numeral 8 denotes a vibration propagating plate comprising a transparent material such as acrylic plate, glass plate, or the like. Coordinates are input by the vibration input pen 3 by touching it onto the vibration propagating plate 8. On the other hand, as shown in Fig. 1B, the peripheral portions of the vibration propagating plate 8 are curved (not bent) to the back side. A reflection preventing material 7 to prevent (reduce) that the reflected vibration is returned to the central portion is provided at the curved edge portion. Vibration sensors 6a to 6c are fixed to the boundary portions of the edge portions, respectively. Each of the vibration sensors 6a to 6c is constructed by an element such as a piezoelectric element or the like to convert a mechanical vibration to an electric signal. The operation and the like of the vibration propagating plate 8 will be described in detail hereinlater.

Reference numeral 9 denotes a signal waveform detector to output signals indicating that the vibration was detected by the vibration sensors 6a to 6c the operation controller 1. The signal waveform detector 9 will be also described in detail hereinafter. Reference numeral 11 indicates a display means or a display such as a CRT (or liquid crystal display) to display on a dot unit basis. The display 11 is arranged on the back side of the vibration propagating plate 8. The display 11 displays dots at the position which was traced by the vibration input pen 3 due to the driving of a display driver 10. The displayed dots can be observed through the vibration propagating plate 8 (because it is made of the transparent material). That is, the dots are displayed at the position on the display 11 corresponding to the detected coordinates of the vibration input pen 3. An image constructed by elements such as points, lines, or the like which were input by the vibration input pen 3 appears after the locus of the vibration input pen 3 as if it was written onto a paper.

On the other hand, according to the above construction, it is also possible to use an input system in which a menu is displayed on the display 11 and a desired item is selected by using the vibration input pen 3, or a system in which a prompt is displayed and the vibration input pen 3 is touched to a predetermined position, or the like.

Fig. 2 shows a structure (cross sectional view) of the vibration input pen 3 of the embodiment.

A vibrator 4 provided in the vibration input pen 3 is driven by the vibrator driver 2. A drive signal of the vibrator 4 is supplied as a low level pulse signal from the operation controller 1 and is amplified at a predetermined gain by the vibrator driver 2 which can drive by a low impedance. Thereafter, the amplified signal is supplied to the vibrator 4.

The electrical drive signal is converted into the mechanical ultrasonic vibration by the vibrator 4 and is propagated to the vibration propagating plate 8 through the horn portion (pen tip) 5.

A vibrating frequency of the vibrator 4 is selected to a value such as to enable a plate wave to be generated from the vibration propagating plate 8 comprising an acrylic plate, a glass plate, or the like. On the other hand, when the vibrator 4 is driven, a vibrating mode is selected such that the vibrator 4 vibrates mainly in the direction perpendicular to the vibration propagating plate 8 in Fig. 2. By setting the vibrating frequency of the vibrator 4 to the resonance frequency of the vibrator 4, the vibration conversion can be efficiently performed.

The elastic wave which is propagated to the vibration propagating plate 8 as mentioned above is a plate wave and has an advantage such that it is difficult to be influenced by scratches, obstacles, or the like on the surface of the vibration propagating plate 8 as compared with the surface wave or the like.

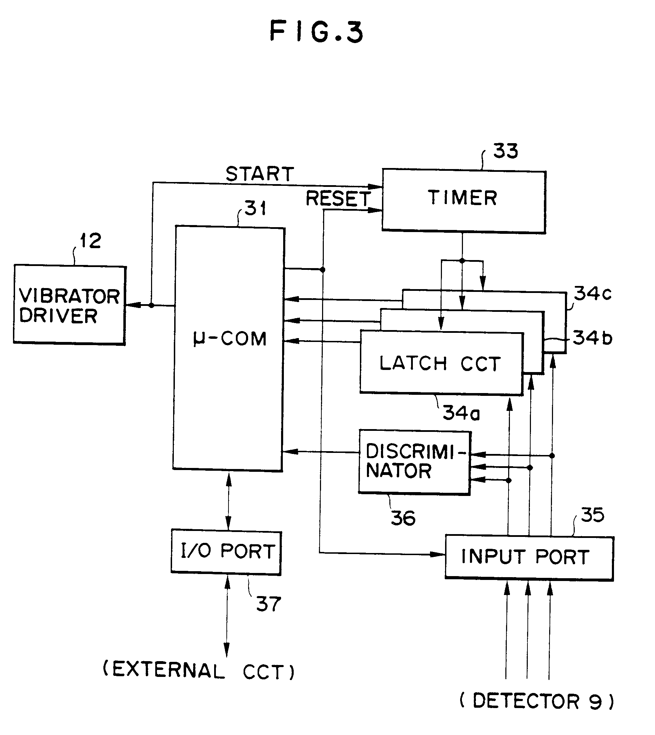

<Description of the operation controller (Fig. 3)>

In the above construction, the operation controller 1 outputs a signal for driving the vibrator 4 in the vibration input pen 3 to the vibrator driver 2 every predetermined period (for instance, every five msec.) and starts the timing operation by a timer (comprising a counter) in the operation controller 1. The vibration generated by the vibration input pen 3 is delayed in accordance with the distances from the vibration sensors 6a to 6c and arrives at the vibration sensors. The signal waveform detector 9 detects the signals from the vibration sensors 6a to 6c and produces signals indicative of vibration arrival timings to the vibration sensors by waveform detecting process, which will be explained hereinlater. The operation controller 1 receives the signal of every vibration sensor and detects the vibration arrival times to the vibration sensors 6a to 6c, thereby calculating the coordinate position of the vibration input pen 3.

On the basis of the calculated coordinate position information of the vibration input pen 3, the operation controller 1 drives the display driver 10 and controls the display operation of the display 11.

Fig. 3 shows an internal construction of the operation controller 1 in the embodiment. The component elements of the operation controller 1 and the outline of the operation will now be described hereinbelow.

In the diagram, reference numeral 31 denotes a microcomputer to control the operation controller 1 and the whole coordinate input apparatus. The microcomputer 31 has therein an internal counter, an ROM in which an operating procedure is stored, an RAM which is used as a work area, and the like. Reference numeral 33 denotes a timer (comprising a counter) to count reference clocks (not shown). The counting operation is started by outputting a start signal to start the driving of the vibrator 4 in the vibration input pen 3 to the vibrator driver 2. That is, the timing to start the counting operation and the timing to generate the vibration are synchronized.

The circuits as the other component elements will now be sequentially explained hereinlater.

The vibration arrival timing signals of the vibration sensors 6a to 6c obtained through the signal waveform detector 9 are input to latch circuits 34a to 34c through a detection signal input port 35. The latch circuits 34a to 34c correspond to the vibration sensors 6a to 6c. When the latch circuits 34a to 34c receive the timing signals as detection signals of the corresponding vibration sensors 6a to 6c, they latch count values of the timer 33 at that time points. When a discriminator 36 determines that all of the detection signals have been received, it outputs a signal indicative of the completion of the reception of all of the detection signals to the microcomputer 31. When the microcomputer 31 receives such a signal from the discriminator 36, the microcomputer 31 reads out the vibration arrival times to the vibration sensors 6a to 6c from the latch circuits 34a to 34c and calculates the coordinate position of the vibration input pen 3 on the vibration propagating plate 8 by predetermined calculations. The calculated coordinate position information is output to the display driver 10 through an I/O port 37, thereby allowing, for example, dots or the like to be displayed at the corresponding position of the display 11.

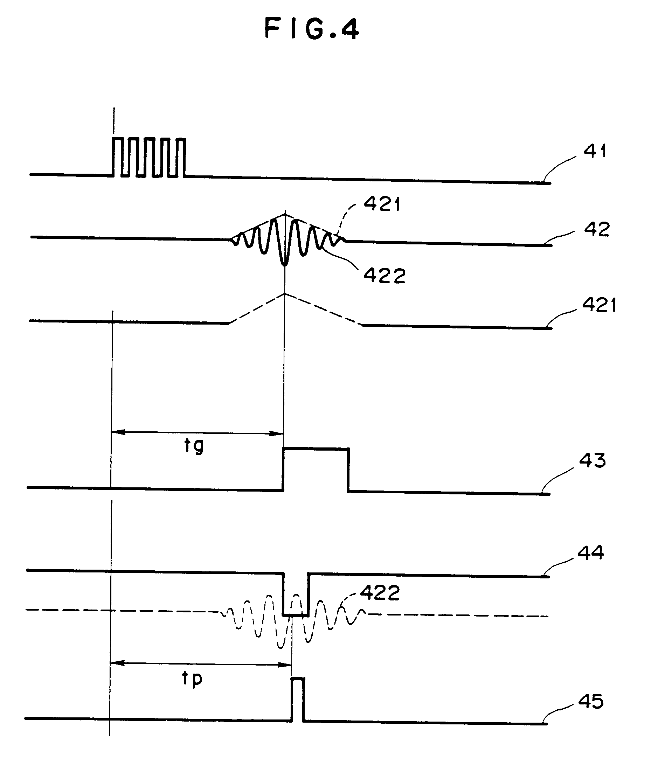

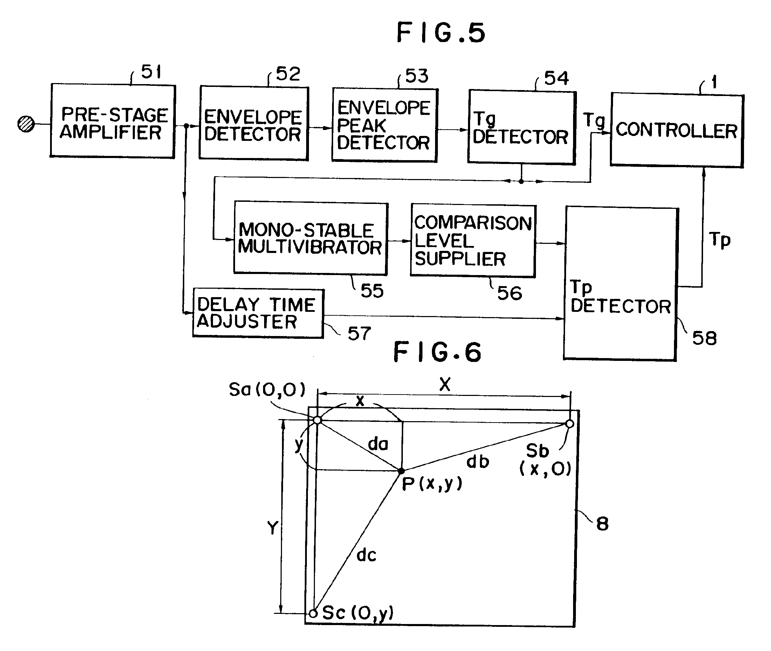

<Description of the detection of the vibration propagation times (Figs. 4 and 5)>

The principle to measure the vibration arrival times to the vibration sensors 6a to 6c will now be described hereinbelow.

Fig. 4 is a diagram for explaining detection waveforms which are input to the signal waveform detector 9 and the processes to measure the vibration propagation times based on them. Explanation will be made hereinbelow with respect to the case of vibration sensor 6a. The same shall also apply to the other vibration sensors 6b and 6c.

As already described above, the measurement of the vibration propagation time to the vibration sensor 6a is started by outputting the start signal to the vibrator driver 2.

At this time, a signal 41 has been applied from the vibrator driver 2 to the vibrator 4.

The ultrasonic vibration which was propagated from the vibration input pen 3 to the vibration propagating plate 8 by the signal 41 progresses for a time $t_g$ corresponding to the distance from the vibration sensor 6a and, thereafter, it is detected by the vibration sensor 6a. A signal 42 shown in the diagram indicates a signal waveform detected by the vibration sensor 6a.

The vibration used in the embodiment is a plate wave. Therefore, the relation between an envelope 421 and a phase 422 of the detection waveform changes in accordance with the propagation distance in the vibration propagating plate 8 during the propagation of the vibration.

It is now assumed that a progressing velocity, i.e., a group velocity of the envelope 421 is set to $V_g$ and a phase velocity of the phase 422 is set to $V_p$. The distance between the vibration input pen 3 and the vibration sensor 6a can be detected from the difference between the group velocity $V_g$ and the phase velocity $V_p$.

First, when attention is paid only to the envelope 421, its velocity is set to $V_g$. When a point on a certain special waveform, for instance, the peak is detected like a signal shown by 43 in the diagram, a distance between the vibration input pen 3 and the vibration sensor 6a can be obtained by

$$d = V_g \cdot t_g \quad (1)$$

where, $t_g$ denotes the vibration propagation time.

Although the equation (1) relates to one of the vibration sensors 6a, the distance between each of the other two vibration sensors 6b and 6c and the vibration input pen 3 can be also expressed by the same equation based on the similar principle.

Further, the process based on the detection of the phase signal is executed to determine the coordinate values at a higher accuracy.

Assuming that the time from a special detection point on the phase waveform signal 422, for instance, from the time point when the vibration was applied to the zero cross point after passage of the peak point is set to $t_p$, the distance between the vibration sensor and the vibration input pen 3 is calculated by

$$d = n \cdot \lambda_p + V_p \cdot t_p \quad (2)$$

where, $\lambda_p$ denotes a wavelength of elastic wave and n is an integer.

From the equations (1) and (2), the integer n is expressed by

$$n = [(V_g \cdot t_g - V_p \cdot t_p)/\lambda_p + I/N] \quad (3)$$

where, N indicates a real number other than 0 and is set to a proper numerical value. For instance, if N = 2 and a fluctuation of the group delay time $t_g$ lies within a range of ±1/2 wavelength, n can be determined. By substituting the value of n obtained as mentioned above into the equation (2), the distance between the vibration input pen 3 and the vibration sensor 6a and, further, the distance between the vibration input pen 3 and the vibration sensors 6b and 6c can be accurately measured.

Signals 43 and 45 to measure the two vibration propagation times $t_g$ and $t_p$ mentioned above are obtained by the signal waveform detector 9. The signal waveform detector 9 is constructed as shown in Fig. 5.

In Fig. 5, the output signal of the vibration sensor 6a is amplified to a predetermined level by a pre-stage amplifier 51. The amplified signal is input to an envelope detector 52 and only the envelope of the detection signal is extracted. The timing of the peak of the extracted envelope is detected by an envelope peak detector 53. From the peak detection signal, a signal $T_g$ (signal 53) as an envelope delay time detection signal of a predetermined waveform is formed by a $T_g$ signal detector 54 comprising a mono-stable multivibrator or the like. The $T_g$ signal is input to the operation controller 1.

The $T_g$ signal is transmitted through a mono-stable multivibrator 55 and a comparison level supplier 56 to a $T_p$ detector 58, by which the $T_g$ signal is compared with the original signal which was delayed by a delay time adjuster 57. The phase delay time signal $T_p$ is supplied from the $T_p$ detector 58 to the operation controller 1.

The above-described circuit relates to the vibration sensor 6a and the same circuits are also provided for the other vibration sensors 6b and 6c.

Assuming that the number of vibration sensors is generally set to h, h detection signals of envelope delay times $T_{gl}$ to $T_{gh}$ and h detection signals of phase delay times $T_{pl}$ to $T_{ph}$ are input to the operation controller 1.

The operation controller 1 receives the signals $T_{gl}$ to $T_{gh}$ and $T_{pl}$ to $T_{ph}$ from the input port 35 and latches the count value of the timer 33 into the latch circuits 34a to 34c by using the respective timings as trigger signals. Since the operation of the timer 33 is started synchronously with the driving of the vibration input pens 3, the data indicative of the delay times of the envelopes and phases of the vibration sensors 6a to 6c are latched into the latch circuits 34a to 34c.

<Description of the calculation of the coordinate position (Fig. 6)>

The principle when the coordinate position of the vibration input pen 3 on the vibration propagating plate 8 is actually detected will now be described.

It is now assumed that the coordinates of the vibration sensor 6a on the vibration propagating plate 8 are set to $S_a(0, 0)$, that is, an origin and the coordinate positions of the vibration sensors 6b and 6c are set to $S_b(x,0)$ and $S_c(0,y)$. The coordinates of the vibration input pen 3 assume $P(x,y)$.

The distances between the vibration input pen 3 and the vibration sensors 6a to 6c assume $d_a$ to $d_c$, respectively. On the basis of the above-described principle, the coordinates $P(x,y)$ are obtained by the following equations by the theorem of three squares.

$$x = \frac{X}{2} + \frac{(d_a + d_b) \cdot (d_a - d_b)}{2X}$$

$$y = \frac{Y}{2} + \frac{(d_a + d_c)\cdot(d_a - d_c)}{2Y}$$

where, X and Y indicate distances in the lateral and vertical directions of the vibration sensors 6b and 6c from the vibration sensor 6a.

As mentioned above, the position coordinates of the vibration input pen 3 can be detected in a real-time manner.

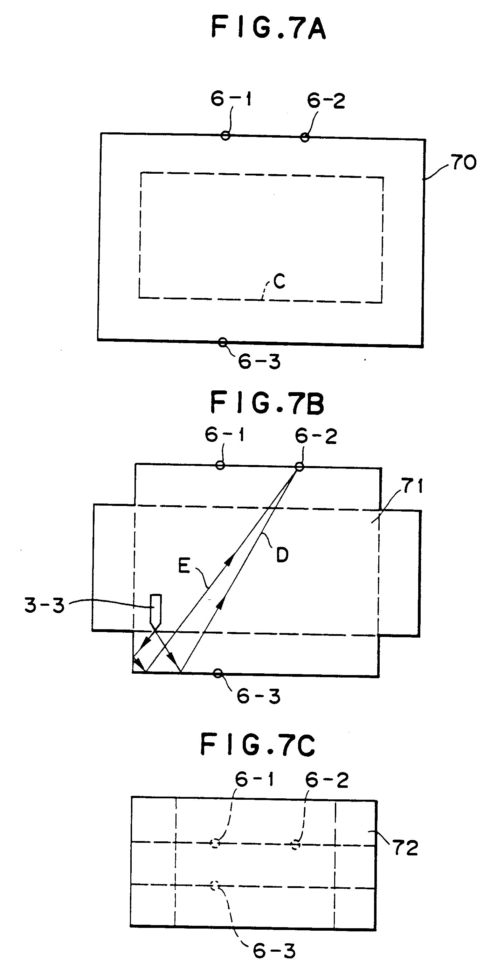

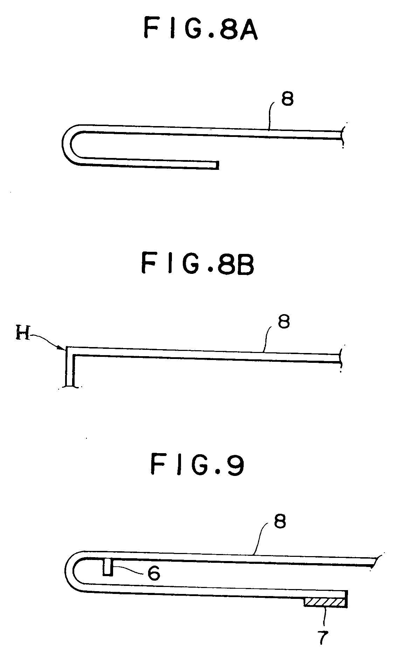

<Description of the vibration propagating plate (Figs. 7 and 8)>

The operation of the vibration propagating plate 8 in the embodiment will now be described in comparison with that in the conventional apparatus.

Fig. 7A shows an effective area C due to the construction of conventional vibration propagating plate 70 and vibration sensors 6-1 to 6-3. Fig. 7B shows a vibration propagating plate 71 in which the corner portions of the vibration propagating plate 70 are eliminated on the basis of the effective area C. The influences by the vibration reflected waves from the edge surfaces (or boundaries of the vibration preventing material attached) of the vibration propagating plate 71 are similar to those in the case of Fig. 7A. Therefore, an effective area c can be assured similarly to the case of Fig. 7A. This will be also obvious from the fact that, for instance, at the position of a vibration input pen 3-3, a propagation path E of the reflected wave is longer than a propagation path D of the reflected wave.

In the embodiment, the portions of the vibration propagating plate 71 other than the effective area in Fig. 7B are curved to the back side, thereby forming a vibration propagating plate 72 as shown in Fig. 7C. In this case as well, the paths of the reflected waves are similar to those in Fig. 7B and the same effective area is provided, so that the projection area of the plan view can be substantially equalized with the effective area. In other words, the ratio of the effective area of the coordinate input which is occupied in the whole area of the coordinate input apparatus main body (tablet) can be increased. Therefore, in the case of using a tablet having the size of the same effective area, the apparatus of the type according to the embodiment is fairly miniaturized as compared with the conventional one.

The curved portions of the vibration propagating plate 72 are curved as shown in Fig. 8A. As R (diameter) of "curve" is larger, it is better. Therefore, for instance, a sudden (steep) bent portion as shown in Fig. 8B is undesirable. This is because the vibration is reflected by a bent portion H and the plate wave vibration boundary conditions suddenly change, so that a rapid change in specific acoustic impedance occurs. Therefore, even in the curved portion, it is desirable that a folded portion serving as a reflecting portion does not exist.

<Description of the other embodiments (Figs. 9 to 12)>

In the above embodiments, as shown in Fig. 1B, the vibration sensors 6a to 6c are attached to the attaching boundaries of the vibration preventing material or to the positions near it which are not influenced by the reflected waves and the edge portions of the vibration propagating plate 8 are curved in such a structure. However, the invention is not limited to such a construction.

For instance, as shown in Fig. 9, by setting the curved portion of the vibration propagating plate 8 to a further large portion, each vibration sensor can be also attached near the effective area. Therefore, the effects similar to those in the above embodiments can be also accomplished. It is desirable to set the size of the curved portion in a manner such that the distance from each of the vibration sensors 6a to 6c to the peripheral portion of the vibration propagating plate 8 is set to a value such as not to be exerted by the reflected wave.

Thus, as compared with the case where the vibration preventing material exists near the vibration sensors 6a to 6c, the direct waves due to the vibration preventing material are attenuated or the interferences by the reflected waves by the boundaries of the vibration preventing material are eliminated. Further, an adverse influence such as a directivity or the like of the detection waveform due to the incident direction to the vibration sensor including the above two influences is eliminated.

On the other hand, the vibration propagating plate 8 can be formed by any method of the ordinary pressing process, emboss process, or the like.

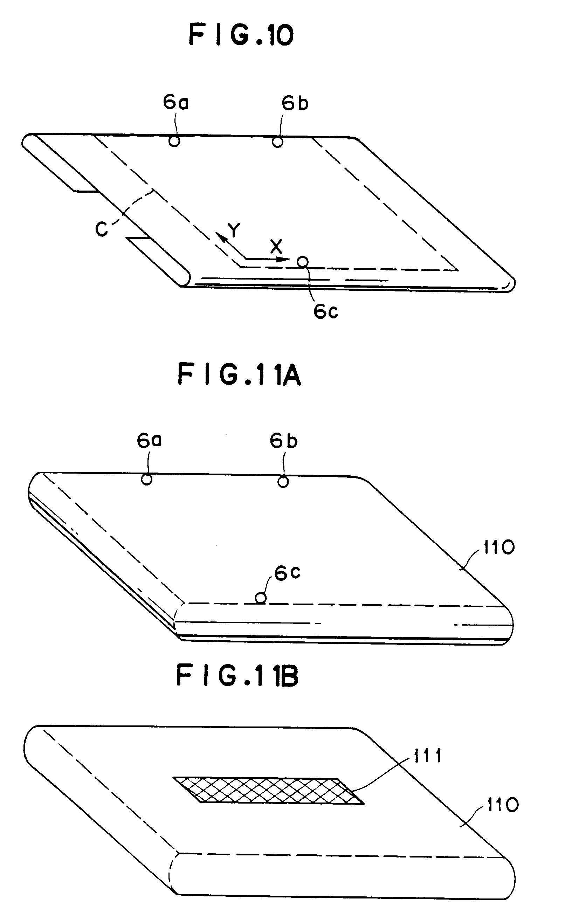

Further, for instance, as shown in Fig. 10, the edge portion may be curved only in the Y direction. In this case, the size in the Y direction can be reduced by a relatively easy process or the like. Moreover, in the case of an arrangement of the vibration sensors 6a to 6c as shown in the diagram, there is also an advantage such that an adverse influence which is caused since the vibration preventing material and the positions of the vibration sensors 6a to 6c are close is eliminated.

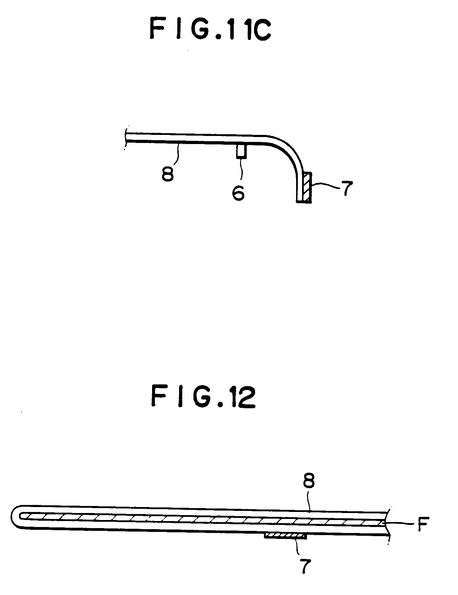

Further, the vibration propagating plate 8 can be also formed like an integrated box shape in which the front side is as shown in Fig. 11A and the back side is as shown in Fig. 11B. Even in such a structure, since the vibration is transferred to the vibration propagating plate 8 on the back side, the apparatus can be miniaturized without being influenced by the reflected waves. In addition, the vibration propagating plate 8 of such a shape can be also commonly used as an external packaging casing of a product. As shown by 111 in Fig. 11B, a vibration preventing material to prevent the reverberation and the transfer of the vibration to the back side is attached to the central portion of the vibration propagating plate 8 on the back side. Fig. 11C is a cross sectional view of an edge portion of a vibration propagating plate 8.

As still another embodiment, it is considered that the vibration propagating plate 8 has a triple-layer structure as shown in Fig. 12. A vibration insulative layer F such as a sponge or the like is sandwiched in the intermediate layer and the upper and lower layers are coupled in the curved edge portion. A vibration preventing material is attached to the central portion of the back surface. With this construction, the operation similar to that in the above embodiment of the invention is accomplished and a thinner small vibration propagating plate 8 can be further formed.

As described above, according to the embodiments, the ratio of the effective area regarding the coordinate input of the coordinate input apparatus which occupies in the whole coordinate input area can be increased, so that the coordinate input apparatus can be miniaturized.

The curving position which has been described in the embodiments is set within at least the effective area regarding the coordinate input. The size of curving portions is set so as not to exert an adverse influence on the effective area by the reflected waves. This is because although this state is most effective, the object to solve the problems in the conventional technique can be accomplished by merely curving the portions near the edge sides.

As described above, according to the invention, since the ratio of the effective area regarding the coordinate input to the size of the coordinate input apparatus main body is set to a large value, the increase in size of the coordinate input apparatus can be prevented.

## Claims

1. A coordinate input apparatus comprising a vibration propagating plate (8), a plurality of vibration sensors (6a to 6c) attached at predetermined positions of said vibration propagating plate (8), a vibration input pen (3) for inputting a vibration to a predefined coordinate input area (C) of said vibration propagating plate (8), and means (1, 9) for detecting a coordinate position of said vibration input pen (3) on the basis of times which are required until said vibration input by said vibration input pen (3) is detected by said vibration sensors (6a to 6c),

   **characterized in that**

   portions of said vibration propagating plate (8) near edge sides which portions lie outside said coordinate input area (C) of said vibration propagating plate (8) have a curved shape such that the ratio of the predefined coordinate input area (C) to the external dimensions of the apparatus is enlarged, thereby making it possible to prevent the whole apparatus increasing in size.

2. An coordinate input apparatus according to claim 1, **characterized by** display means (11) provided under said vibration propagating plate (8).

3. An coordinate input apparatus according to claim 1 or 2, **characterized in that** said vibration propagating plate (8) is made of a glass plate.

4. An coordinate input apparatus according to any of the preceding claims 1 to 3, **characterized in that** an upper layer and a lower layer of said vibration propagating plate (8) are coupled at edge portions of said curved portions.

5. A coordinate input apparatus according any of the preceding claims 1 to 4, **characterized in that** said means (1, 9) for detecting a coordinate position include operation control means (1) for calculating coordinates of the position at which said vibration input pen (3) touches said vibration propagating plate (8) on the basis of propagation times ($t_g$, $t_p$) of said vibration detected by said vibration sensors (6a to 6c).

6. A coordinate input apparatus according to claim 5, **characterized in that** said operation control means (1) calculates the coordinates of the touch position of said vibration input pen (3) on the basis of said propagation times ($t_g$, $t_p$) of both of a group velocity waveform and a phase velocity waveform of said vibration detected by said vibration sensors (6a to 6c).

7. A coordinate input apparatus according to claim 4 or any of the preceding claims 5 to 6 when dependent on claim 4, **characterized in that** a vibration preventing material is provided in an intermediate layer (F) sandwiched by said upper and lower layers of said vibration propagating plate (8) to reduce reflected waves of said vibration.

## Patentansprüche

1. Koordinateneingabegerät mit einer Schwingungs-Fortpflanzungsplatte (8), einer Vielzahl von Schwingungssensoren (6a bis 6c), die an vorbestimmten Stellen der Schwingungs-Fortpflanzungsplatte (8) angebracht sind, einem Schwingungs-Eingabestift (3) zum Eingeben einer Schwingung in einer vorbestimmten Koordinaten-Eingabefläche (C) der Schwingungs-Fortpflanzungsplatte (8) und einer Vorrichtung (1, 9) zum Erfassen einer Koordinatenposition des Schwingungs-Eingabestiftes (3) auf Grundlage von Zeiten, die erforderlich sind, bis die durch den Schwingungs-Eingabestift (3) eingegebene Schwingung durch die Schwingungssensoren (6a bis 6c) erfaßt ist,
**dadurch gekennzeichnet, daß**
Abschnitte der Schwingungs-Fortpflanzungsplatte (8) in der Nähe von Randseiten eine gekrümmte Form aufweisen, wobei die Abschnitte außerhalb der Koordinaten-Eingabefläche (C) der Schwingungs-Fortpflanzungsplatte (8) liegen, so daß das Verhältnis der vordefinierten Koordinaten-Eingabefläche (C) zu den äußeren Abmessungen des Geräts vergrößert ist, wodurch verhindert werden kann, daß die Größe des gesamten Geräts zunimmt.

2. Koordinateneingabegerät nach Anspruch 1, **gekennzeichnet durch** eine Anzeigeeinrichtung (11), die unter der Schwingungs-Fortpflanzungsplatte (8) vorgesehen ist.

3. Koordinateneingabegerät nach Anspruch 1 oder 2, **dadurch gekennzeichnet, daß** die Schwingungs-Fortpflanzungsplatte (8) aus einer Glasplatte hergestellt ist.

4. Koordinateneingabegerät nach einem der vorangehenden Ansprüche 1 bis 3, **dadurch gekennzeichnet, daß** eine obere Schicht und eine untere Schicht der Schwingungs-Fortpflanzungsplatte (8) an Randabschnitten der gekrümmten Abschnitte verbunden sind.

5. Koordinateneingabegerät nach einem der vorangehenden Ansprüche 1 bis 4, **dadurch gekennzeichnet, daß** eine Vorrichtung (1, 9) zum Erfassen einer Koordinatenposition eine Operations-Steuereinrichtung (1) zum Berechnen von Koordinaten der Position, bei der der Schwingungs-Eingabestift (3) die Schwingungs-Fortpflanzungsplatte (8) berührt, auf Grundlage von Ausbreitungszeiten ($t_g$, $t_p$) der durch die Schwingungssensoren (6a bis 6c) erfaßten Schwingung enthält.

6. Koordinateneingabegerät nach Anspruch 5, **dadurch gekennzeichnet, daß** die Operations-Steuereinrichtung (1) die Koordinaten der Berührposition des Schwingungs-Eingabestiftes (3) auf Grundlage der Ausbreitungszeiten ($t_g$, $t_p$) sowohl einer Gruppengeschwindigkeits-Kurvenform als auch einer Phasengeschwindigkeits-Kurvenform der Schwingung berechnet, die durch die Schwingungssensoren (6a bis 6c) erfaßt ist.

7. Koordinateneingabegerät nach Anspruch 4 oder einem der vorangehenden Ansprüche 5 bis 6 wenn abhängig von Anspruch 4, **dadurch gekennzeichnet, daß** ein Schwingungs-Verhinderungsmaterial zum Verringern von reflektierten Wellen der Schwingung in einer Zwischenschicht (F) vorgesehen ist, die zwischen der oberen und der unteren Schicht der Schwingungs-Fortpflanzungsplatte (8) schichtenweise angeordnet ist.

**Revendications**

1. Appareil d'introduction de coordonnées comprenant une plaque (8) de propagation des vibrations, une pluralité de capteurs (6a à 6c) de vibrations fixés dans des positions prédéterminées de ladite plaque (8) de propagation des vibrations, un crayon (3) d'introduction de vibrations pour introduire une vibration dans une surface (C) prédéfinie d'introduction de coordonnées de ladite plaque (8) de propagation des vibrations, et des moyens (1, 9) pour détecter une position de coordonnées dudit crayon (3) d'introduction de vibrations sur la base du temps qui sont nécessaires pour que ladite introduction de vibrations par ledit crayon (3) d'introduction de vibrations soit détectée par lesdits capteurs (6a à 6c) de vibrations, **caractérisé en ce que** des parties de ladite plaque (8) de propagation des vibrations près des côtés latéraux, ces parties se trouvant à l'extérieur de ladite surface (C) d'introduction des coordonnées de ladite plaque (8) de propagation des vibrations, ont une forme courbe, de telle sorte que le rapport de la surface (C) prédéfinie d'introduction de coordonnées aux dimensions extérieures de l'appareil est augmenté, afin de pouvoir empêcher que tout l'appareil ait des dimensions qui augmentent.

2. Appareil d'introduction de coordonnées selon la revendication 1, **caractérisé par** un moyen (11) formant visuel disposé sous ladite plaque (8) de propagation des vibrations.

3. Appareil d'introduction de coordonnées selon la revendication 1 ou 2, **caractérisé en ce que** ladite plaque (8) de propagation des vibrations est formée d'une plaque de verre.

4. Appareil d'introduction de coordonnées selon l'une quelconque des revendications 1 à 3, caractérisé en ce qu'une couche supérieure et une couche inférieure de ladite plaque (8) de propagation des vibrations sont couplées sur les parties latérales desdites parties courbes.

5. Appareil d'introduction de coordonnées selon l'une quelconque des revendications précédentes 1 à 4, **caractérisé en ce que** lesdits moyens (1, 9) pour détecter une position de coordonnées comportent un moyen (1) de commande de fonctionnement pour calculer des coordonnées de la position dans laquelle ledit crayon (3) d'introduction des vibrations entre en contact avec ladite plaque (8) de propagation des vibrations sur la base des temps de propagation ($t_g$, $t_p$) de ladite vibration détectée par lesdits capteurs (6a à 6c) de vibrations.

6. Appareil d'introduction de coordonnées selon la revendication 5, **caractérisé en ce que** ledit moyen (1) de commande de fonctionnement calcule les coordonnées de la positon de contact dudit crayon (3) d'introduction de vibrations sur la base desdits temps ($t_g$, $t_p$) à la fois d'une forme d'onde de vitesse de groupe et d'une forme d'onde de vitesse de phase de ladite vibration détectée par lesdits capteurs (6a à 6c) de vibration.

7. Appareil d'introduction de coordonnées selon la revendication 4 ou l'une quelconque des revendications précédentes 5 à 6 lorsqu'elles dépendent de la revendication 4, **caractérisé en ce qu'**un matériau empêchant les vibrations est disposé dans une couche intermédiaire (F) prise en sandwich par lesdites couches supérieure et inférieure de ladite plaque (8) de propagation des vibrations pour réduire les ondes réfléchies de ladite vibration.

# FIG.1A

EP 0 367 282 B1

# FIG.1B

# FIG.2

VIBRATOR
DRIVER

(CONTROLLER 1)

# FIG.3

# F I G . 4

# FIG.5

PRE-STAGE AMPLIFIER — 51

ENVELOPE DETECTOR — 52

ENVELOPE PEAK DETECTOR — 53

Tg DETECTOR — 54

CONTROLLER — 1

MONO-STABLE MULTIVIBRATOR — 55

COMPARISON LEVEL SUPPLIER — 56

Tp DETECTOR — 58

DELAY TIME ADJUSTER — 57

Tg

Tg

Tp

# FIG.6

Sa(O,O)

X

x

da

Sb (x,O)

db

P(x,y)

y

Y

dc

Sc(O,y)

8

EP 0 367 282 B1

EP 0 367 282 B1

# FIG.7A

6-1    6-2

70

C

6-3

# FIG.7B

6-1    6-2

71

D

E

3-3

6-3

# FIG.7C

6-1    6-2

72

6-3

15

FIG.8A

8

FIG.8B

H

8

FIG.9

8

6

7

# FIG.10

# FIG.11A

# FIG.11B

# F I G.11C

# F I G.12

# FIG.13